Europäisches Patentamt

European Patent Office

Office européen des brevets

(11) Veröffentlichungsnummer: **0 378 050**

**A2**

# (12) EUROPÄISCHE PATENTANMELDUNG

(21) Anmeldenummer: **89810970.7**

(22) Anmeldetag: **21.12.89**

(51) Int. Cl.5: **G02B 6/38**

(30) Priorität: **10.01.89 CH 71/89**

(43) Veröffentlichungstag der Anmeldung:
**18.07.90 Patentblatt 90/29**

(84) Benannte Vertragsstaaten:
**AT BE CH DE ES FR GB GR IT LI LU NL SE**

(71) Anmelder: **Diamond SA**
**Via dei Patrizi 5**
**CH-6616 Losone(CH)**

(72) Erfinder: **Marazzi, Slvio**

**CH-6654 Cavigliano(CH)**

(74) Vertreter: **Wenger, René et al**
**Hepp, Wenger & Partner AG Marktgasse 18**
**CH-9500 Wil(CH)**

(54) **Lichtleiterendstück für eine Lichtleitfaser.**

(57) Das Kernteil (4) aus plastisch verformbarem Material ist im hohlzylindrischen Aussenteil (2) aus relativ hartem Material an einer Stützschulter (6) abgestützt und befestigt. Besonders gute Ergebnisse können dabei erzielt werden, wenn das Kernteil (4) etwa pilzförmig ausgebildet ist und eine Scheibe (7) mit einem Schaft (8) aufweist. Die Scheibe (7) kann temperaturbedingte Dilatationen besonders gut aufnehmen.

Fig.1

EP 0 378 050 A2

## Lichtleiterendstück für eine Lichtleitfaser

Die Erfindung betrifft ein Lichtleiterendstück für eine Lichtleitfaser gemäss dem Oberbegriff von Anspruch 1. Derartige Stecker werden in der Regel paarweise in einer gemeinsamen Zentrierhülse zusammengeführt, wobei die Lichtleitfasern an den Stirnseiten der Stecker Kern auf Kern positioniert werden. Das Kernteil aus plastisch verformbarem Material erlaubt eine hochpräzise Zentrierung der Lichtleitfaser relativ zum Aussenmantel des Aussenteils, wobei am Kernteil mit geeigneten Werkzeugen Materialdeformationen vorgenommen werden.

Gattungsmässig vergleichbare Lichtleiterendstücke sind z.B. durch die EP-A-94 906 oder durch die DE-A-34 42 822 bekannt geworden. Ein Problem bei bekannten Steckern kann dadurch entstehen, dass die unterschiedlichen Materialien von Aussenteil und Kernteil unterschiedliche Ausdehnungskoeffizienten aufweisen. Bei Temperaturschwankungen kann dabei eine Wanderung der Lichtleitfaser im Aussenteil eintreten, welche möglicherweise irreversibel bleibt. Die damit verbundene Ungenauigkeit der Faserpositionierung hat ersichtlicherweise höhere Dämpfungswerte bei der Uebertragung zur Folge. Die bisher üblichen, im wesentlichen zylindrischen Kernteile können bei einer Materialausdehnung ausserdem den Klebstoff im Klebstoffspalt zwischen Aussenteil und Kernteil verdrängen, so dass dieser an der Stirnseite austritt. Anderseits können bei einer Kontraktion Risse und Abspaltungen eintreten, was mit der Zeit gar zu einer Lockerung des Kernteils führen kann. Es ist daher eine Aufgabe der Erfindung, ein Lichtleiterendstück der eingangs genannten Art zu schaffen, bei dem das Kernteil im Aussenteil temperaturbedingte Dilatationen ausführen kann, ohne dass es dabei zu einer radialen und/oder axialen Verschiebung der Faser kommen kann.

Ausserdem soll die Verbindung zwischen Aussenteil und Kernteil so ausgebildet sein, dass weder Materialaustritte durch Verdrängung, noch Hohlräume und Risse durch Materialkontraktion auftreten können.

Diese Aufgabe wird erfindungsgemäss mit einem Lichtleiterendstück gelöst, welches die Merkmale von Anspruch 1 aufweist.

Die axiale Abstützung des Kernteils am Aussenteil hat den Vorteil, dass sich das Kernteil in axialer Richtung nicht verschieben kann. Durch die feste Verbindung an der Schulter wird ausserdem erreicht, dass auch bei temperaturbedingten Dehnungen oder Kontraktionen die axiale Bohrung stets im Zentrum verbleibt, und dass das Ende der Bohrung mit der Lichtleitfaser stets die äusserste Ebene der Stirnseite bildet.

Besonders vorteilhaft wird das Kernteil mit radialem Spiel im Aussenteil befestigt, wobei die radialen Zwischenräume mit einem elastischen Füllstoff und/oder Klebstoff ausgefüllt werden können. Das radiale Spiel erlaubt eine Ausdehnung des Kernteils innerhalb bestimmter Grenzen, wobei der elastische Füllstoff die Bewegungen mitvollziehen kann. Da der Füllstoff nicht mehr primär Klebefunktionen übernehmen muss, kann seine Zusammensetzung optimal abgestimmt werden.

Weitere Vorteile ergeben sich ausserdem, wenn die Stützschulter als kreisringförmige Vertiefung ausgebildet ist, und wenn das Kernteil etwa pilzförmig mit einer Scheibe und mit einem Schaft ausgebildet ist, wobei die Aussenseite der Scheibe die Stirnseite des Lichtleiterendstücks bildet. Die Scheibe verhält sich dabei wie eine Membrane und kann so Dilatationen der Bauteile besonders gut aufnehmen. Der Schaft gewährleistet eine ausreichende Halterung und Stabilisierung der Lichtleitfaser an ihrem Endabschnitt. Die Aussenseite des Schaftes dient zugleich als Kontaktfläche für eine elastische Klebstoffverbindung mit der Bohrung des Aussenteils.

Weitere Vorteile und Einzelmerkmale der Erfindung ergeben sich aus dem nachstehend beschriebenen Ausführungsbeispiel und aus den Zeichnungen. Es zeigen:

Figur 1 einen Querschnitt durch den Endbereich eines Lichtleiterendstücks gemäss der Erfindung, und

Figur 2 das Lichtleiterendstücks gemäss Figur 1 in verschiedenen Zuständen.

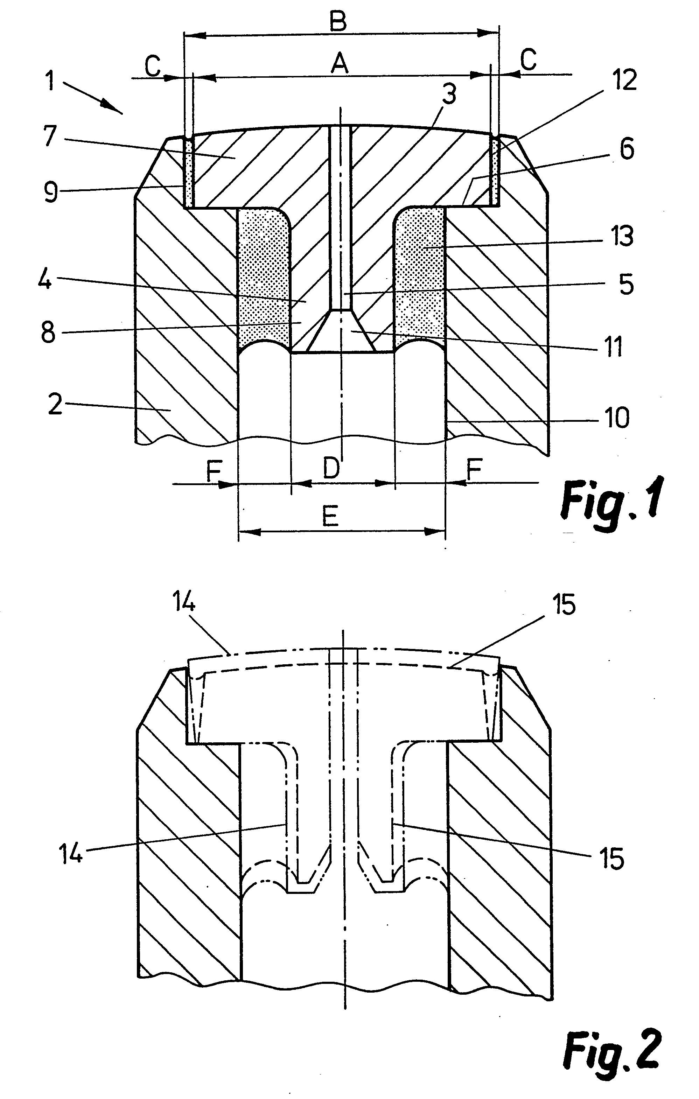

Figur 1 zeigt ein Lichtleiterendstück 1 bestehend aus einem hohlzylindrischen Aussenteil 2 aus relativ hartem Material und aus einem Kernteil 4 aus plastisch verformbarem Material. Der komplette Stecker enthält selbstverständlich noch weitere, hier nicht näher dargestellte Steckeraussenteile, Ueberwurfmuttern usw. Auch die Lichtleitfaser selbst mit ihrer Ummantelung ist aus Gründen der besseren Uebersichtlichkeit hier nicht dargestellt. Die von ihrer Ummantelung befreite Lichtleitfaser wird in die koaxiale Bohrung 5 eingesteckt und anschliessend durch eine konzentrische Materialdeformation an der Stirnseite 3 des Kernteils 4 positioniert. Nachjustierungen der Faser auf eine bestimmte Seite hin sind möglich.

Das Aussenteil 2 besteht vorzugsweise aus Hartmetall, das sich äusserst präzise bearbeiten lässt und das als Sinterwerkstoff einen relativ geringen Wärmeausdehnungskoeffizienten hat. Anstelle von Hartmetall könnten in bestimmten Fällen aber auch andere relativ harte Materialien wie z.B. gehärteter Stahl, Keramik oder andere Sinterwerkstoffe verwendet werden. Das plastisch deformierbare Kernteil besteht vorzugsweise aus einer Buntmetall-legierung wie z.B. Neusilber. Die Stirnseite 3 ist etwas konvex ausgebildet, so dass an benachbarten Steckern praktisch nur die Faserstirnseiten aufeinander liegen.

Wie dargestellt ist das Kernteil 4 etwa pilzförmig ausgebildet und hat eine Scheibe 7 und einen sich daran anschliessenden und gegen die Steckerinnenseite gerichteten Schaft 8. Die Scheibe 7 liegt auf einer Stützschulter 6, die als kreisringförmige Vertiefung mit einer Seitenwand 9 im Aussenteil 2 ausgebildet ist. Die Scheibe 7 ist dabei vollständig in das Aussenteil 2 versenkt, so dass die relativ empfindliche stirnseitige Kante des Lichtleiterendstücks durch das harte Aussenteil 2 gebildet wird. Gleichzeitig wird so auch das Kernteil 4 geschützt.

Das Kernteil 4 ist an der Stützschulter 6 vorzugsweise mit einer Lötung oder einer Verklebung befestigt. Es wären aber auch andere feste Verbindungen wie z.B. Laserschweissen oder ähnliches denkbar. Das rotationssymmetrische Kernteil 4 ist im hohlzylindrischen Aussenteil 2 mit radialem Spiel fixiert. Wie dargestellt ist das Spiel C zwischen der Scheibe 7 und der Seitenwand 9 um einiges kleiner als das Spiel F zwischen dem Schaft 8 und der Bohrung 10 im Aussenteil 2.

Der Aussendurchmesser A der Scheibe 7 und der Innendurchmesser B der Seitenwand 9 werden so gewählt, dass die Scheibe 7 gewisse Kontraktionen und Ausdehnungen ausführen kann. Der Ringspalt wird mit einer Versiegelungsmasse 12 ausgefüllt, welche das Eindringen von Feuchtigkeit und Mikropartikeln verhindert.

Dagegen wird der Aussendurchmesser D des Schaftes 8 so klein wie möglich gehalten, so dass Ausdehnungen gering gehalten werden können. Der Aussendurchmesser D wird im wesentlichen durch die Notwendigkeit des Einführtrichters 11 für die Lichtleitfaser bestimmt. Auch die Länge des Schaftes 8 wird durch die vorbestimmte Länge der Bohrung 5 bestimmt. Der Ringspalt zwischen dem Schaft 8 und der Bohrung 10 wird mit einem Kleber 13 ausgefüllt, der das Kernteil 4 zusätzlich im Aussenteil 2 fixiert. Dieser Klebstoff kann sich jedoch gegen die Steckerinnenseite frei ausdehnen, ohne dass dabei ein Schaden angerichtet werden kann.

Der Klebstoff zum Befestigen des Kernteils 4 an der Stützschulter 6 kann gleichzeitig auch die Funktion der Versiegelungsmasse 12, bzw. des Klebers 13 übernehmen.

Zum Grössenvergleich sind nachstehend ein paar Masse angegeben, wie sie an einem gängigen Steckertyp realisiert wurden. Diese Masse können selbstverständlich je nach Anwendungsfall variieren. Die axiale Gesamtlänge des Kernteils 4 beträgt ca. 2 mm, wobei die Dicke der Scheibe 7 ca. 0,5 mm beträgt. Der Aussendurchmesser A der Scheibe 7 beträgt ca. 1,8 mm und das radiale Spiel C beträgt ca. 0,02 mm.

In Figur 2 sind durch die unterbrochenen Linien 14 und 15 die Relativlagen bei verschiedenen Temperaturen angedeutet. Die Umrisslinie 14 zeigt das Kernteil 4 bei höheren Temperaturen, wobei sich die Scheibe 7 und der Schaft 8 ausdehnen. Die Scheibe 7 tritt ausserdem geringfügig über die Seitenwand 9 hinaus, wobei das Uebermass jedoch vernachlässigbar klein ist. Die Umrisslinie 15 zeigt das Kernteil 4 bei tieferen Temperaturen, bei denen eine Kontraktion stattfindet. Bei beiden Temperaturextremen bleibt jedoch die Bohrung 5 und damit die Lichtleitfaser genau im Zentrum des Aussenteils 2, so dass keine Dämpfungsverluste auftreten können. Die elastischen Füllstoffmassen 12 und 13 machen die Dilatationen mit, ohne dass störende Wulste oder dergleichen an der Stirnseite 3 auftreten können.

**Ansprüche**

1. Lichtleiterendstück (1) für eine Lichtleitfaser, bestehend aus einem hohlzylindrischen Aussenteil (2) aus relativ hartem Material, das wenigstens an der zur Koppelung mit einem gleichartigen Lichtleiterendstück dienenden Stirnseite (3) mit einem Kernteil (4) aus plastisch verformbaren Material gefüllt ist, wobei das Kernteil (4) eine koaxiale Bohrung (5) aufweist, in der die Lichtleitfaser fixierbar ist, dadurch gekennzeichnet, dass das Aussenteil (2) eine Stützschulter (6) aufweist, und dass das Kernteil (4) auf der Stützschulter (6) derart aufliegt, dass es in axialer Richtung abgestützt ist, und dass das Kernteil wenigstens an der Stützschulter fest mit dem Aussenteil verbunden ist.

2. Lichtleiterendstück nach Anspruch 1, dadurch gekennzeichnet, dass das Kernteil (4) mit radialem Spiel (C, F) im Aussenteil (2) befestigt ist, und dass die radialen Zwischenräume mit einem elastischen Füllstoff (12, 13) und/oder Klebstoff ausgefüllt sind.

3. Lichtleiterendstück nach Anspruch 1 oder 2, dadurch gekennzeichnet, dass die Stützschulter (6) als kreisringförmige Vertiefung ausgebildet ist, und dass das Kernteil (4) etwa pilzförmig mit einer Scheibe (7) und mit einem Schaft (8) ausgebildet ist, wobei die Aussenseite der Scheibe die Stirnseite (3) des Lichtleiterendstücks bildet.

4. Lichtleiterendstück nach Anspruch 3, dadurch gekennzeichnet, dass die Scheibe (7) des Kernteils im Aussenteil (2) versenkt ist.

5. Lichtleiterendstück nach einem der Ansprüche 3 oder 4, dadurch gekennzeichnet, dass das Spiel (F) zwischen dem Schaft (8) und der Bohrung

(10) im Aussenteil (2) grösser ist als das Spiel (C) zwischen der Scheibe (7) und der Seitenwand (9) der kreisringförmigen Vertiefung.

6. Lichtleiterendstück nach einem der Ansprüche 1 bis 5, dadurch gekennzeichnet, dass das Aussenteil (2) aus Hartmetall, Keramik oder anderen Sinterwerkstoffen gefertigt ist.

7. Lichtleiterendstück nach einem der Ansprüche 1 bis 6, dadurch gekennzeichnet, dass das Kernteil (4) aus einer Buntmetallegierung gefertigt ist.

8. Lichtleiterendstück nach einem der Ansprüche 1 bis 7, dadurch gekennzeichnet, dass das Kernteil (4) an der Stützschulter (6) durch eine Lötung befestigt ist.

9. Lichterleiterendstück nach einem der Ansprüche 1 bis 7, dadurch gekennzeichnet, dass das Kernteil (4) an der Stützschulter (6) durch eine Verklebung befestigt ist.

**Fig.1**

**Fig.2**